# EUROPÄISCHE PATENTANMELDUNG

(11) **EP 0 970 649 A1**
(43) Veröffentlichungstag der Anmeldung: **12.01.2000**
(21) Anmeldenummer: 99113278.8
(22) Anmeldetag: 08.07.1999
(51) Int. Cl.: A47J 37/12

(54) **Frittier- und Kochgerät**

(30) Priorität: 09.07.1998 DE 29812263 U
(71) Anmelder: Oregon S.r.l., 41042 Fiorano Modenese (MO) (IT)
(72) Erfinder: Nasi, Mauro, 41053 Maranello (MO) (IT)
(74) Vertreter: Grünecker, Kinkeldey, Stockmair & Schwanhäusser Anwaltssozietät

(57) **Zusammenfassung**

Das Frittier- oder Kochgerät verfügt über einen Behälter (2) zum Aufnehmen einer Frittier- oder Kochflüssigkeit. Eine Heizung (6) dient zum Erhitzen der Flüssigkeit. Das Gerät verfügt über eine definierte Sammelzone (8) zur Aufnahme von Verunreinigungen. Innerhalb der Flüssigkeit wird durch einen Strömungserzeuger eine Flüssigkeitsströmung (9) in Richtung auf die Sammelzone erzeugt.

## Beschreibung

Die Erfindung bezieht sich auf ein Frittier- oder Kochgerät der im Oberbegriff des Anspruchs 1 erläuterten Art.

Ein derartiges Gerät ist aus der DE-PS 738 120 bekannt. Das bekannte Frittier- oder Kochgerät weist einen Behälter für die Frittier- oder Kochflüssigkeit auf, dessen Boden sich nach unten spitzkegelig verjüngt. In der Senke des Bodens sollen sich Verunreinigungen ansammeln, die dort leicht abgesaugt werden können. Der Behälter ist doppelwandig ausgebildet, wobei sich im Wandhohlraum eine Heizflüssigkeit befindet, die durch Brenner erwärmt wird und ihrerseits die Innenwand des Behälters über im wesentlichen die gesamte Füllstandshöhe der Frittier- oder Kochflüssigkeit und somit die Flüssigkeit selbst im Behälter erwärmt. Weiterhin befindet sich die Heizflüssigkeit auch in einem Heizregister, das im Inneren des Behälters in direktem Kontakt mit der Frittier- oder Kochflüssigkeit angeordnet ist. Die Heizung ist somit so ausgelegt und angeordnet, daß sie die Frittier- oder Kochflüssigkeit gleichmäßig erwärmt. Die Verunreinigungen können sich somit lediglich durch Schwerkraft bedingt in der Spitze des Bodens ansammeln. Dies funktioniert zwar für relativ schwere Verunreinigungen, leichtere Verunreinigungen setzen sich hingegen nur langsam ab, bzw. werden durch eingetauchtes Frittier- oder Kochgut immer wieder aufgewirbelt. Diese Verunreinigungen, wie beispielsweise abgebrochene Stücke des Frittier- oder Kochgutes, Teile einer Panade oder dgl., werden dann immer wieder erhitzt, verbrennen und beeinträchtigen den Geschmack des Frittier- oder Kochgutes bzw. verursachen Gerüche. Dieses Problem wird noch verstärkt, wenn das Frittier- oder Kochgerät in Verkaufsautomaten verwendet wird, wo es nicht unter dauernder Kontrolle durch eine Bedienungsperson steht.

Der Erfindung liegt somit die Aufgabe zugrunde, ein Frittier- oder Kochgerät bereitzustellen, bei dem die Probleme, die von Verunreinigungen der Frittier- oder Kochflüssigkeit herrühren, verhindert bzw. verringert werden.

Die Aufgabe wird durch ein Frittier- oder Kochgerät mit den Merkmalen des Anspruchs 1 gelöst.

Durch die erfindungsgemäße Ausgestaltung werden Verunreinigungen aktiv in die Sammelzone gespült und dort festgehalten, so daß sich beispielsweise verbrannte Teilchen nicht am neuen Frittier- oder Kochgut festsetzen können. Durch die Konzentrierung der Verunreinigungen in der Sammelzone ist es wesentlich einfacher, die Flüssigkeit auch automatisch zu reinigen, ohne daß eine Bedienperson nach noch in der Flüssigkeit schwimmenden Teilchen fischen muß.

Die Flüssigkeitsströmung wird gemäß Anspruch 2 auf einfache Weise durch ein lokal begrenztes Aufheizen der Flüssigkeit erzeugt.

Durch die Maßnahme nach Anspruch 3 wird der Einfluß der Schwerkraft zusätzlich zur Strömung zum Sammeln der Verunreinigungen ausgenutzt.

Die Maßnahme nach Anspruch 4 hilft mit, die Verunreinigungen in der Sammelzone zu halten.

Durch den in Anspruch 5 beschriebenen Ablaß können Verunreinigungen in einem vorbestimmten Zeitintervall abgelassen werden, ohne daß es notwendig ist, das gesamte Frittier- oder Kochgerät außer Betrieb zu setzen.

Die Ausbildung einer Thermikströmung wird durch die Maßnahme nach Anspruch 6 noch verbessert, da sich beim Eintauchen des Frittier- oder Kochgutes die Flüssigkeit abkühlt und demzufolge zu Boden sinkt.

Um zu verhindern, daß bereits angesammelte Verunreinigungen wieder aufgewirbelt werden, ist es gemäß Anspruch 7 zweckmäßig, die Heizung in einem horizontalen Abstand zur Sammelzone anzuordnen.

Anspruch 8 beschreibt eine besonders bevorzugte konstruktive Ausgestaltung des erfindungsgemäßen Frittier- oder Kochgerätes.

Die indirekte Beheizung der Flüssigkeit über die Wandung erfordert keinerlei Einbauten, die eine sich eventuell aufbauende Strömung stören würden. Außerdem wird dadurch auch die lokale Überhitzung der Flüssigkeit vermieden, was die Gefahr des Ver- und Einbrennens verringert und die Rauchentwicklung hemmt.

Die Maßnahme nach Anspruch 10 verbessert das Feshalten der Verunreinigung in der Sammelzone.

Die Maßnahme nach Anspruch 11 verbessert die Ausbildung einer Strömung.

Durch die gemäß Anspruch 12 tangential in den Behälter einmündende Einlaßöffnung kann einerseits die Frittier- oder Kochflüssigkeit so in den Behälter eingeleitet werden, daß sie an der Wand entlang strömt und dort eventuell festgesetzte Partikel löst.

Insbesondere bei Verwendung des erfindungsgemäßen Frittier- oder Kochgerätes in Verkaufsautomaten ist es gemäß Anspruch 13 sinnvoll, eine Reinigungsmöglichkeit vorzusehen, bei der der Behälter nicht entnommen werden muß, wie dies bei bekannten Geräten der Fall ist.

Die konstruktive Ausgestaltung gemäß Anspruch 14 mit dem trichterförmigen Boden, der mittig angeordneten Ablaßöffnung und der tangentialen Einlaßöffnung gestattet eine im wesentlichen selbsttätige Reinigung des Behälters, bei der sichergestellt ist, daß alle Bereiche der Innenseite des Behälters gereinigt werden können.

Ein weiteres Problem bei Frittier- oder Kochgeräten für einen Dauereinsatz sind die entstehenden Dämpfe, die Verunreinigungen in Form von Flüssigkeitströpfchen, kleinsten festen Partikeln oder Gerüche mitreißen. Um diese Dämpfe etwas zu reinigen wurde bereits in der FR 2 086 562 vorgeschlagen, den Deckel eines Frittier- oder Kochgerätes als Kondensationsfläche für den Wrasen auszubilden. Da sich jedoch der Deckel immer erwärmt, ist damit zu rechnen, daß die Kondensationsflächen bei Dauergebrauch des Geräts ihre Wirkung verlieren. Durch die Anordnung eines Wärmetauschers gemäß Anspruch 15 wird eine Wrasenreinigung auch bei Dauergebrauch sichergestellt.

Besonders zweckmäßig ist es, wenn gemäß Anspruch 16 ein bereits vorhandenes Kühlmittel auch für die Zwecke der Wrasenreinigung eingesetzt wird.

Anspruch 17 beschreibt einen besonders bevorzugten Verwendungszweck für das erfindungsgemäße Frittier- oder Kochgerät für einen Zubereitungsautomaten, der sowohl münzbetätigt für Selbstbedienung oder in Imbißstuben oder dgl. eingesetzt werden kann.

Ein Ausführungsbeispiel der Erfindung wird nachfolgend anhand der Zeichnungen näher erläutert. Es zeigen:
- Fig. 1: einen Längsschnitt durch ein erfindungsgemäßes Frittier- oder Kochgerät in schematischer Darstellung, und
- Fig. 2: die Draufsicht auf Fig. 1 in schematischer Darstellung.

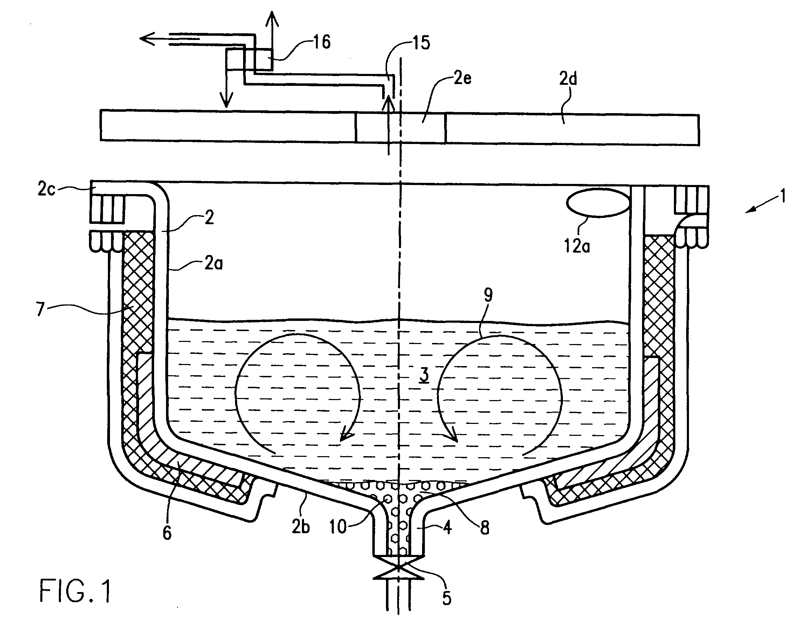

In Fig. 1 ist ein Frittier- oder Kochgerät 1 ersichtlich, das der Einfachheit halber nachfolgend nur als Gerät bezeichnet wird. Das Gerät 1 enthält einen Behälter 2, vorzugsweise aus Edelstahl und/oder mit einer Antihaft-Beschichtung, der eine Frittier- oder Kochflüssigkeit 3, wie beispielsweise Öl, Fett, Bouillon, Wasser oder dgl., aufnimmt. Der Behälter 2 hat eine im wesentlichen kreiszylindrische Wandung 2a und einen trichterförmig sich verjüngenden Boden 2b, an dessen tiefster Stelle, fluchtend mit einer Mittellinie des Behälters 2, ein Ablaßstutzen 4 angeordnet ist, der eine Senke bildet und durch ein Ventil 5 absperrbar ist. Der Behälter 2 weist weiterhin einen oberen Rand 2c auf, auf dem ein Deckel 2d mit einer Beladeöffnung 2e sitzt.

Am Übergang zwischen der zylindrischen Wandung 2a zum trichterförmigen Boden 2b ist im radialen, horizontalen Abstand zum Ablaßstutzen 4 eine Heizung 6 für das Flüssigkeitsbad 3 angeordnet. Die Heizung 6 erstreckt sich im wesentlichen ringförmig um den Ablaßstutzen 4 herum und steht mit der Außenseite der Wandung des Behälters 2 in Verbindung, um das Flüssigkeitsbad 3 über die Wandung indirekt aufzuheizen. Die Heizung kann eine elektrische Heizung bzw. jede für diesen Zweck geeignete Heizung sein.

Die Heizung 6 ist in eine Isolierung 7 eingebettet, die sich ebenfalls rings um den Behälter 2 erstreckt, jedoch einen vorbestimmten, radialen, horizontalen Bereich um den Auslaßstutzen 4 freiläßt. Auf diese Weise wird die Flüssigkeit im Bereich um den Auslaßstutzen 4 herum eine Temperatur aufweisen, die etwas geringer ist als die Temperatur derjenigen Bereiche des Flüssigkeitsbades 3, die sich direkt neben der Heizung 6 befinden. Dieser Temperaturunterschied führt zu einer im wesentlichen torusförmigen Strömungsbewegung 9 der Flüssigkeit 3, die im Bereich der Heizung 6 nach oben und in Richtung auf den Ablaß 4 nach unten strömt. Auf diese Weise wird der Senke um den Ablaß 4 herum als Sammelzone 8 für Verunreinigungen 10 festgelegt, die aus Gründen der Übersichtlichkeit vergrößert dargestellt sind, jedoch auch als Kleinstpartikel bzw. Trübstoffe vorliegen können. Durch die erfindungsgemäß ausgebildete Strömung 9 wird somit einerseits das schwerkraftbedingte Absetzen der Verunreinigungen 10 in der Sammelzone 8 verstärkt und andererseits sichergestellt, daß die angesammelten Verunreinigungen 10 auch in der Sammelzone 8 festgehalten werden, wenn das Flüssigkeitsbad 3 durch Einsetzen und durch Entnahme von Frittier- oder Kochgut in Bewegung versetzt wird.

Wird das Frittier- oder Kochgut, wie bei derartigen Behälter 2 üblich, durch die Beladungsöffnung 2e nahe in der Mitte des Behälters 2 (im Bereich der Mittlellinie) senkrecht oberhalb des Ablaßstutzens 4 in das Flüssigkeitsbad 3 eingebracht, so kühlt sich das Flüssigkeitsbad 3 im Bereich oberhalb des Ablaßstutzens 4 zusätzlich ab, was die Strömung 9 verstärkt.

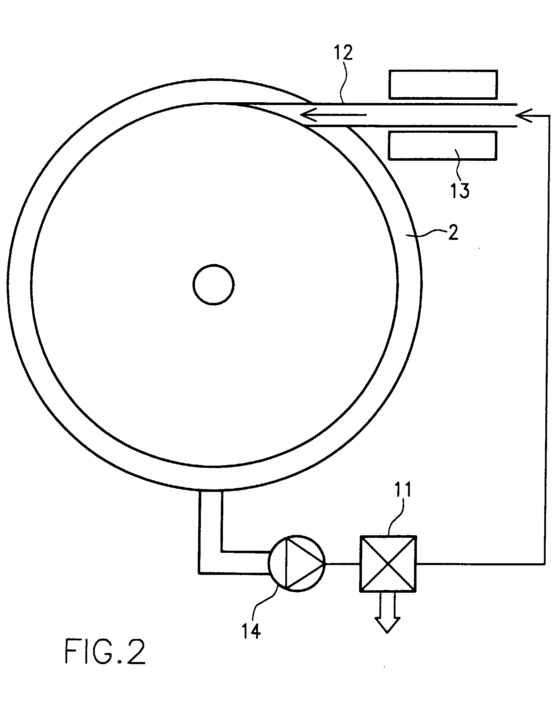

Die in der Sammelzone 8 angesammelten Verunreinigungen 10 können von Zeit zu Zeit durch den Ablaßstutzen abgelassen werden, beispielsweise indem das Ventil 5 über eine vorbestimmte Zeit geöffnet wird. Die zusammen mit den Verunreinigungen abgelassene Flüssigkeit kann, wie Fig. 2 zeigt, in den Behälter 2 rückgeführt werden, wobei die Verunreinigungen 10 vorher durch einen Filter 11 herausgefiltert wurden. Die gereinigte Flüssigkeit gelangt über einen Einlaßstutzen 12 wieder in den Behälter 2. Zweckmäßigerweise ist der Einlaßstutzen 12 kurz vor seiner Einmündung in den Behälter 2 mit einer Heizung 13 versehen, die die rückgeführte Flüssigkeit wieder auf Frittier- oder Kochtemperatur erwärmt.

Die Flüssigkeit aus dem Einlaßstutzen 12 gelangt über seine kurz unterhalb des oberen Randes 2c des Behälters 2 angeordnete Einlaßöffnung 12a tangential zur zylindrischen Wandung 2a in den Behälter 2. Auf diese Weise strömt die Flüssigkeit zunächst an der Wandung entlang und reißt dort eventuell vorhandene Verunreinigungen mit, die dann in das Flüssigkeitsbad 3 gelangen und in die Sammelzone 8 eingetragen werden.

Zum Austausch der Flüssigkeit 3 im Behälter 2 ist dem Auslaßstutzen 4 weiterhin ein Mehrwegeventil 14 nachgeordnet, das die Flüssigkeit entweder zum Filter 11 oder in einen Abfall- oder Recyclingbehälter leiten kann. Die Wiederbefüllung des Behälters 2 mit frischer Flüssigkeit erfolgt über den Einlaßstutzen 12.

Das in Fig. 2 beschriebene System kann weiterhin zur Reinigung des Gerätes 1 eingesetzt werden. Das Reinigungsmittel kann auf einfache Weise über den Einlaßstutzen 12 in den Behälter 3 einfließen und erzeugt durch die tangentiale Anordnung des Einlaßstutzens 12 eine Umfangsströmung, die dafür sorgt, daß Verunreinigungen von der Wandung des Behälters 2 abgewaschen werden. Das Reinigungsmittel wird über den Ablaßstutzen 4 abgeleitet und über eine entsprechende Stellung des Mehrwegeventils 14 in einem dafür geeigneten Behälter gesammelt bzw. in die Kanalisation abgeführt.

Ein Problem bei der Sauberhaltung von Frittier- oder Kochgeräten 1 stellen auch die entstehenden Wrasen bzw. Dämpfe dar, die insbesondere beim Frittieren auch Öltröpfchen enthalten, die sich an jeder kälteren Fläche niederschlagen und dort mit der Zeit einen Schmierfilm bilden. Außerdem ist die Geruchsbelästigung durch diese Dämpfe relativ hoch. Um dies zu vermeiden, ist eine Öffnung, in Fig. 1 die Eingabeöffnung 2e, des Deckels 2d, mit einer Abluftleitung 15 verbunden. Die Abluftleitung 15 führt im Kreuzstromverfahren durch einen nur schematisch dargestellten Wärmetauscher 16, in dem die mitgerissenen Flüssigkeitströpfchen kondensieren bzw. sich die mitgerissenen Verunreinigungen bzw. Gas- oder Wasserdampf ablagern.

Das erfindungsgemäße Frittier- oder Kochgerät wird bevorzugt für Zubereitungs- und Ausgabeautomaten eingesetzt, bei denen die Zubereitung und Ausgabe der Lebensmittel sowie die Befüllung, Entleerung und Reinigung des Gerätes im wesentlichen automatisch erfolgen sollte. Derartige Automaten sind beispielsweise aus der WO93/15643 oder der WO96/19934, oder der DE-OS 22 56 108 oder der US-PS 5 165 330 bekannt. Ist bei diesen Automaten ein gekühltes Vorratsabteil zur Aufbewahrlung der Lebensmittel vor dem Zubereiten vorhanden, so kann das zum Kühlen des Vorratsabteils verwendete Kühlmittel zweckmäßigerweise auch im Wärmetauscher 16 eingesetzt werden.

In Abwandlung des beschriebenen und gezeichneten Ausführungsbeispiels könnte die Strömung beispielsweise auch durch eine Pumpe oder dgl. erzeugt werden, obwohl die thermisch erzeugte Strömung bevorzugt ist. Die Heizung zum Erzeugen der Strömung kann auch lediglich punktweise an der Wand des Behälters angeordnet sein. Auch eine an geeigneter Stelle im Inneren des Behälters angeordnete Heizung ist möglich, wenn sie die gewünschte Strömung erzeugt. Die Sammelzone kann in einer einfachen Bodenvertiefung in einem ansonsten horizontalen, ebenen Boden oder einfach im Scheitelpunkt eines halbkugelförmigen Bodens ausgebildet sein. Wenn beispielsweise eine Absaugvorrichtung für die Flüssigkeit und/oder die Verunreinigungen in der Sammelzone vorgesehen ist, kann auch der Ablaß entfallen.

## Patentansprüche

1. Frittier- oder Kochgerät, mit einem Behälter zum Aufnehmen einer Frittier- oder Kochflüssigkeit, einer Heizung zum Erhitzen dieser Flüssigkeit und einer vorbestimmten Sammelzone für Verunreinigungen, **gekennzeichnet durch** einen Strömungserzeuger (6) zum Erzeugen einer Flüssigkeitsströmung (9) in Richtung auf die Sammelzone (8).

2. Gerät nach Anspruch 1, **dadurch gekennzeichnet,** daß der Strömungserzeuger als Heizung (6) zum lokal begrenzten Aufheizen der Flüssigkeit ausgebildet ist.

3. Gerät nach Anspruch 1 oder 2, **dadurch gekennzeichnet,** daß die Sammelzone (8) im unteren Bereich des Behälters (2) ausgebildet ist.

4. Gerät nach Anspruch 3, **dadurch gekennzeichnet,** daß die Sammelzone (8) als Senke oder Bodenvertiefung des Behälters (2) ausgebildet ist.

5. Gerät nach einem der Ansprüche 1 bis 4, **dadurch gekennzeichnet,** daß die Sammelzone (8) mit einem Ablaß (4) versehen ist.

6. Gerät nach einem der Ansprüche 1 bis 5, **dadurch gekennzeichnet,** daß die Sammelzone (8) im wesentlichen unterhalb einer Ersteintauchzone des Frittier- oder Kochgutes in die Flüssigkeit (3) angeordnet ist.

7. Gerät nach einem der Ansprüche 2 bis 6, **dadurch gekennzeichnet,** daß die Heizung (6) in einem horizontalen Abstand zur Sammelzone (8) angeordnet ist.

8. Gerät nach einem der Ansprüche 1 bis 7, **dadurch gekennzeichnet,** daß die Sammelzone (8) als Bodenvertiefung des Behälters (2) ausgebildet und im wesentlichen mittig zum Behälter (2) angeordnet ist, und daß die Heizung (6) lokal begrenzt, mit horizontalem Abstand in etwa ringförmig um die Sammelzone (8) angeordnet ist.

9. Gerät insbesondere nach einem der Ansprüche 1 bis 8, **dadurch gekennzeichnet,** daß die Heizung (6) an der Außenseite des Behälters (2) angeordnet ist und die Flüssigkeit (3) über die Behälterwandung (2a, 2b) aufheizt.

10. Gerät nach einem der Ansprüche 1 bis 9, **dadurch gekennzeichnet,** daß die Wandung des Behälters (2) mit einer Isolierung (7) versehen ist, die die Sammelzone (8) ausspart.

11. Gerät nach Anspruch 10, **dadurch gekennzeichnet,** daß die Heizung (6) in die Isolierung (7) eingebettet ist.

12. Gerät nach einem der Ansprüche 1 bis 11, **dadurch gekennzeichnet,** daß der Behälter (2) eine tangential einmündende Einlaßöffnung (12a) aufweist.

13. Gerät nach einem der Ansprüche 1 bis 12, **dadurch gekennzeichnet,** daß der Behälter (2) mit einer Ablaßöffnung (4) versehen ist, und daß eine Einlaßöffnung (12a) zum Einleiten von Reinigungsmittel in den Behälter (2) vorgesehen ist.

14. Gerät nach Anspruch 13, **dadurch gekennzeichnet,** daß der Behälter (2) einen trichterförmigen Boden (2b) mit einer mittig angeordneten Ablaßöffnung (4) und eine im wesentlichen kreiszylindrische Wandung (2a) mit einer in der Nähe des oberen Randes (2c) angeordneten, tangentialen Einlaßöffnung (12a) aufweist.

15. Gerät insbesondere nach einem der Ansprüche 1 bis 14, **dadurch gekennzeichnet,** daß der Behälter (2) mit einem Wärmetauscher (16) zum Kondensieren der Frittier- oder Kochdämpfe verbunden ist.

16. Gerät nach Anspruch 15 in einer Vorrichtung zum automatischen Zubereiten und Ausgeben von frittierten oder gekochten Lebensmitteln, die in einem durch ein Kühlmittel gekühlten Vorratsabteil untergebracht sind, **dadurch gekennzeichnet,** daß der Wärmetauscher (16) vom Kühlmittel des gekühlten Vorratsabteils durchströmt ist.

17. Zubereitungsautomat für Frittier- oder Kochgut, **gekennzeichnet durch** ein Frittier- oder Kochgerät nach einem der Ansprüche 1 bis 16.
